# EUROPEAN PATENT SPECIFICATION

(11) **EP 3 872 272 B1**
(45) Date of publication and mention of the grant of the patent: **05.07.2023**
(21) Application number: 21159314.0
(22) Date of filing: 25.02.2021
(51) Int. Cl.: E04B 1/00

(54) **PREFABRICATED MODULAR STRUCTURE BALCONY AND ARRANGEMENT**
VORGEFERTIGTER MODULARER BALKON UND ANORDNUNG
STRUCTURE MODULAIRE PRÉFABRIQUÉE DE BALCON ET AMÉNAGEMENT

(30) Priority: 26.02.2020 FI 20205196
(43) Date of publication of application: 01.09.2021
(73) Proprietor: HT Laser Oy, 42700 Keuruu (FI)
(72) Inventor: TUOMINEN, Janne, 33710 Tampere (FI)
(74) Representative: Kespat Oy

(56) References cited:
- EP-A1- 0 058 143
- CN-A- 108 179 803
- CN-U- 206 376 364
- NL-C2- 1 009 583

## Description

The invention relates to a prefabricated modular balcony, which includes
- a floor part comprising a surface plate and a base plate which form at least a part of a cell structure that forms the floor part,
- an attachment support joined to the floor part at one edge for attaching the floor part to a building,
- attachment means arranged in the attachment support for attaching the floor part to an attachment support counterpart of a wall of the building, and
- railing structures attached to the floor part.

The invention also relates to an arrangement.

A customer-oriented approach is the foundation of current sales and marketing strategies in many fields. There is also the aspiration with new buildings that a future occupant's desires should be taken into account better than before, the final goal being to thereby equip the apartment according to the customer's wishes. According to the traditional way of thinking, a balcony was either originally a part of an apartment or not. A customer could not decide this detail, the matter already having been decided during the planning of the apartment. A customer buying the apartment, however, may not necessarily want a balcony for their apartment and accordingly have no desire to pay the higher price occasioned by the same. There is a need for a customer to be able to choose whether or not they want a balcony. Balconies to be incorporated in a building are traditionally fabricated as a structure joined solidly together with the frame or elements of the building. An optional balcony is poorly suited to such a building method, as the elements are mass-produced and their customization is too costly.

The publication GB 1259511 is known from the prior art and discloses a modular balcony that can be attached as a complete unit to a wall of a building. The balcony is attached to the building by means of inserts formed in the walls of the building using metal anchor members, which are attached to the side walls of the balcony for lateral support. Metal and wood, which form a cell structure, are used as the building materials for the base of the balcony. On account of the strength of the balcony, the balcony is suspended by the balcony's side walls. The problem with such a structure, however, is the complexity of its manufacture due to the challenging nature of manufacturing a structure to be realized as a combination of different materials. Moreover, the balcony is poorly customizable, as its requisite parts include, in addition to the base, also the walls by which its attachment occurs.

CN 206376364 U discloses a movable house pin -connected panel balcony, including a bearing steel frame and attachment means for attaching the balcony to a house.

The object of the invention is to provide a modular balcony that is easier to customize and easier to manufacture than the balconies of the prior art. The characteristic features of this invention are indicated in the attached claim 1. A further object of the invention is to provide an arrangement in which a balcony is easier to attach to a wall of a building. The characteristic features of this invention are indicated in the attached claim 11.

The object of the invention can be achieved with a prefabricated modular balcony in the form of a metal, laser-welded structure, wherein the structure includes a floor part comprising a surface plate and a base plate which form at least a part of a cell structure that forms the floor part and the surface plate and the base plate are joined to one another by means of laser welds so as to form the cell structure. The balcony further includes an attachment support joined to the floor part at one edge for attaching the floor part to a building, attachment means arranged in the attachment support for attaching the floor part to an attachment support counterpart of a wall of the building, and railing structures attached to the floor part.

In this context, "prefabricated" means that the balcony is manufactured in its entirety at a factory and the balcony is merely mounted in place at the site of its use. The balcony can be disassembled for shipment into a few ready-made main parts, for example the railing structures can be detached from the floor part for transport, so that, in addition to being mounted, the balcony is also quickly assembled at the site of its use from at most four separate prefabricated components into a complete balcony. The balcony is nevertheless advantageously an entirely prefabricated structure, the mounting of which on a wall of a building merely requires raising the balcony into position and fastening the same without any steps relating to the assembly of the balcony. This expedites the mounting and potential removal of the balcony.

A balcony realized by means of laser welding is significantly lighter than a conventionally welded structure while exhibiting the same material strengths. This is due to the fact that filler material, which increases the weight of the balcony structure, is not used in the welding seams. In laser welding, the material of the two objects to be joined melts and fuses during the cooling of the same so that it is not necessary to add separate filler material. The thermal stress in the welding area caused by a weld effected by laser welding is significantly lower than in a conventional weld. As a result, the surface plate and the base plate remain straighter compared to when conventional welding is used and are not subject to distortion during welding. On the other hand, a laser-welded structure can be manufactured without it being necessary to make weld holes in the surface plate and the base plate, as the superimposed materials can be fused without separate weld holes. The laser-welded seams in the balcony according to the invention can be solid so that a very high rigidity is achieved by means of the same.

The laser welds of the balcony are advantageously realized without filler material. In other words, the layers of material of different parts are fused merely by means of a laser without using a weight-increasing filler material.

The balcony can include at least two side walls which form a railing structure, each solidly attached to the floor part. The attachment of the side walls to the floor part reinforces the already adequately rigid structure of the floor part still further.

The attachment supports are advantageously attached to the side walls for suspending the balcony by means of the side walls from the building. The overall resulting rigidity of the balcony is thus very high even when reduced material strengths are used. In addition to supporting the moment of the attachment, a long moment arm is formed, which reduces the stresses acting on the attachment means. In other words, the side walls are thus weight-bearing, i.e. bear the load of the balcony.

The thickness of the cell structure can be 10 - 250 mm, advantageously 10 - 100 mm. A thin structure facilitates the transport and storage of the balconies.

According to the invention, both the surface plate and the base plate include calotte cells opposite one another and with opposite orientations, the surface plate and the base plate being joined together at the site of said calotte cells by means of laser welds. The domed cell structure achieved by means of the calotte cells is very light due to the omission of the intermediate reinforcement plate, yet still very rigid.

The diameter of a circular calotte cell can be 20 - 200 mm. The depth of a calotte cell can be 5 - 125 mm. A calotte cell in this size range is inexpensive to produce and provides the balcony with an adequate strength.

The balcony is advantageously attached to the wall in a detachable manner. This further enables the detachment or replacement of the balcony, if necessary.

The balcony according to the invention may be provided as a complete, prefabricated module that is readily attachable to attachment support counterparts arranged in a wall of a building by the force of gravity. The buyer of an apartment can thus decide whether or not they want a balcony for their apartment and the balcony can be easily attached or detached as necessary according to whether or not the buyer wants a balcony. Attachment merely requires a raising of the balcony into position, a mounting of the balcony in its position and advantageously also a fastening of the attachment. The cell-structured balcony realized as a laser-welded structure can be produced so as to be very thin and light, yet nevertheless a rigid, self-supporting structure, which helps to facilitate the mounting of the balcony.

According to an embodiment, the attachment means are shape-closed hooks or support counterparts that mate with the shape-closed hooks which are arranged in the attachment support for attaching the balcony in a shape-closed manner and by the force of gravity to a wall of a building as well as fastening means for fastening the attachment between the attachment means and the wall. By means of shape-closed hooks and openings, the attachment of the balcony is easy to accomplish by the force of gravity and the realization of the attachment means is a very simple and robust structure. The gravity-engaged and shape-closed attachment can then be reliably fastened by means of fastening means.

According to an embodiment, each attachment support is arranged to be attached to an attachment support counterpart of the wall of the building using at least two shape-closed hooks or support counterparts as fastening means, which hooks and support counterparts are arranged in the attachment support in relation to the ends of the attachment support so that a gap remains between the hooks and the support counterparts of each attachment support, the gap being 35 - 95 %, advantageously 50 - 90 %, of the length of the attachment support. The hook or support counterpart located higher in the operating position of the balcony thus receives the gravitational force created there by the balcony's mass, while the lower hook or support counterpart mainly acts as an additional fastener at the level of the floor of the balcony. At the level of the floor of the balcony, the mass of the balcony causes a force pushing towards the wall of the building that results from the centre of gravity of the balcony and the location of the attachment.

The floor part of the balcony is advantageously manufactured solely from steel by laser welding. A satisfactory rigidity of the floor part is thus easier and simpler to achieve than when different materials are combined.

The fastening means are advantageously transversely oriented bolts of the hooks. By means of the bolts, the gravity-engaged and shape-closed fastening can be fastened with regard to the single degree of freedom of the attachment means, whereby the balcony is securely attached to the wall of the building.

According to an embodiment, the floor part includes edges running around the perimeter delineating the floor part. Solid laser welds improve the rigidity of the cell structure.

According to a further embodiment, the laser welds are also 75 - 100 % solid, advantageously over the entire distance of the site of a joint between the surface plate and the base plate in the embodiment utilizing the domed structure.

"Solid laser weld" means that merely one solid and continuous laser weld joins two separate structures of the balcony at the point of contact or in a cross section of the two separate structures. In other words, the length of a solid and continuous laser weld is at least 3 cm, advantageously at least 6 cm.

According to a further embodiment, the balcony according to the invention is attached to and supported on a wall of a building by merely one side of the floor part by means of the attachment support. In other words, the balcony is supported merely at one point without separate transverse supports or stays, i.e. the floor of the balcony is self-supporting. In this kind of structure, however, the large loads of the moment arm act on the attachment. The rigidity of a laser-welded cell-structured floor part renders possible this type of attachment in which the floor part of the balcony is self-supporting, whereby the balcony can be realized without separate transverse supports so as to be lighter and easier to produce than balconies of the prior art.

Heat regulation means are advantageously arranged inside the cell structure of the floor part in order to regulate the temperature of the floor part. The heat regulation means can be means for heating or cooling the floor part. The heat regulation means are advantageously heating resistors for heating the floor part. The floor part can thus be kept free of ice even in winter in regions subject to minus temperatures. Alternatively, the heat regulation means can be, for example, pipes for a heat-transfer medium via which, for example, a refrigerant fluid is circulated in order to keep the temperature of the floor part pleasant in an area where sunshine renders the floor part of the balcony too hot. The same pipe can alternatively also be used for heating.

A fluid with a low freezing point can be arranged inside the cell structure of the floor part in order to improve the fire resistance of the floor part of the balcony. At the same time, the fluid arranged inside the floor part dampens the temperature fluctuations of the floor part of the balcony as the mass of the balcony increases. In the case of metal balconies, fires pose a large risk, as, if a fire breaks out, the balcony heats up and the furniture on the balcony and other material catch fire.

According to one embodiment, the railing structures and the floor part include positioning tabs and corresponding holes for aligning the railing structures and the floor part with each other. The attachment of the railing structures to the floor part is easy by means of the positioning tabs and holes of the railing structures and floor part formed in connection with an automated laser cutting process, the positioning tabs and holes aligning the railing structure and floor part to be attached with one another with a precision down to half a millimetre so that the welding required for the attachment of the parts can be performed without separate measurements. This reduces the probability of errors while also expediting the manufacture of the balcony. The laser used in the manufacture of the balcony can be a fibre laser or a CO₂ laser.

The floor part can include, in proximity to the site of the joint between the railing structure and the floor part, gutter grooves that are perpendicular to the attachment support and parallel to the plane of the floor part for leading water away from the balcony. It is thus not necessary to add separate gutters or water-removal solutions, as all required components are already integrated in the structure of the balcony.

Advantageously, the railing structures are also cell structures. This way, the railing structures are also rigid and contribute to the rigidity of the balcony through their attachment to the floor part.

The surface plate and the base plate are advantageously respectively solid metal plates without perforations. If laser welding is used, it is not necessary to perforate the surface and base plates for welding, the metal plates being fused together in the course of the laser welding. The rigidity of solid metal plates is greater than that of perforated metal plates, which improves the structural rigidity of the balcony.

The floor part of the balcony can be a metal plate with a thickness of 0.5 - 10.0 mm, advantageously 1.0 - 3.0 mm. This makes the realization of a very light balcony possible, the balcony potentially even weighing less than 300 kg, whereas, if the balcony were to be realized in a conventional manner from a thicker material in the form of a steel-encased structure, its weight would be as much as three times that of the balcony according to the invention.

The width of the laser weld can be 0.8 - 2.0 mm, advantageously 1.0 - 1.5 mm. The very small width of the laser weld produces very little distortion in the plates, which improves the quality of the final product and expedites its manufacture.

The floor part of the balcony advantageously consists exclusively of metal. All joints of the floor part can thus be produced by laser welding, which expedites the manufacture of the floor part.

The total height of the floor part can be 50 - 150 mm, advantageously 80 - 120 mm. An adequate rigidity is thereby achieved with the cell structure.

Advantageously, at least the floor part of the balcony is made of an acid-resistant steel. Such a material withstands variable weather well.

The floor part formed as a laser-welded structure does not require auxiliary supporting edge girders or the like, as the floor part possesses the required rigidity in and of itself.

The cell structure acts as the only load-bearing structure in the balcony. The balcony can thus be realized without separate I-beams or the like arranged inside the balcony, which increase the weight of a balcony considerably.

According to an embodiment, a solar panel can be employed in the floor part of the balcony or in the side walls or in both for the generation of solar power.

Alternatively, a fluid-circulation circuit containing heat-transfer fluid can be formed inside the floor part or side walls or both, by means of which the balcony acts as a heat exchanger, collecting the heat of the sun and subsequently emitting heat to the ambient area. The fluid-circulation circuit advantageously includes connections by means of which the fluid-circulation circuit of the balcony can be connected to a fluid-circulation circuit of the building, whereby heat is transferred either to or away from the building depending on whether one wishes to heat or cool the building or a part of the same. The balcony realized as a cell structure by means of laser welds can form a fluid-tight space so that a separate container structure inside the balcony is not necessary. For example, a mixture of glycol and water can be employed as the heat-transfer fluid.

Two material plates are joined by laser welding in such a manner that a welding seam is made through the uppermost plate so as to reach the lower plate; the thickness of the uppermost plate can be at most 14 mm with stainless steel and 20 mm with black iron in order for the action of the laser weld at a maximum penetration to reach at least 1 mm into the other plate lying underneath. The combined thickness of the materials can be at most 14 mm with stainless steel and 20 mm with black iron in order to realize a reliable welding seam. In an advantageous embodiment, the combined thickness is 6 mm, the thickness of the individual plates being 3 mm.

In laser welding, the welding seam is formed from the fusion of the materials of the parts to be joined to one another in the welding zone.

The object of the arrangement according to the invention can be achieved with an arrangement including a modular balcony realized as a laser-welded structure and an attachment support counterpart that can be solidly attached to a wall of a building for the attachment of the balcony to a wall of a building. The balcony includes a floor part comprising a surface plate and a base plate which form at least a part of a cell structure that forms the floor part and the surface plate and the base plate are joined together by means of laser welds so as to form the cell structure. The balcony further includes an attachment support joined to the floor part at one edge for attaching the floor part to a building, attachment means arranged in the attachment support for attaching the floor part to an attachment support counterpart of a wall of the building, and railing structures attached to the floor part. Moreover, the arrangement includes attachment means arranged in the attachment support as well as further attachment means arranged in the attachment support counterpart for attaching the attachment support counterpart and the floor part to the attachment support.

The balcony is advantageously attached to the attachment support counterparts of the wall of the building in a detachable manner. The balcony is thus also easy to remove, if necessary, for example for maintenance.

The floor part advantageously has edges that run around the perimeter of the floor part.

The features of the balcony according to the invention illustrated in the different embodiments can be employed in the arrangement according to the invention.

The invention is illustrated in the following in detail with reference to the attached drawings illustrating embodiments of the invention, wherein
- Figure 1: shows an axonometric view of an arrangement according to the invention,
- Figure 2: shows an axonometric view of a balcony according to the invention attached to the wall of a building,
- Figure 3: shows an axonometric and partial cross-section view of an embodiment of a balcony not a part of the invention,
- Figure 4: shows a front view of an embodiment of a balcony not a part of the invention in cross-section,
- Figure 5: shows a profile view of an arrangement according to the invention from above,
- Figure 6: shows an arrangement according to the invention from above,
- Figure 7: shows a profile view of positioning tabs usable during the assembly of a balcony according to the invention,
- Figure 8: shows a profile view of a second, alternative embodiment for realizing the cell structure in cross-section,
- Figure 9: shows an axonometric view of the second, alternative embodiment for realizing the cell structure.

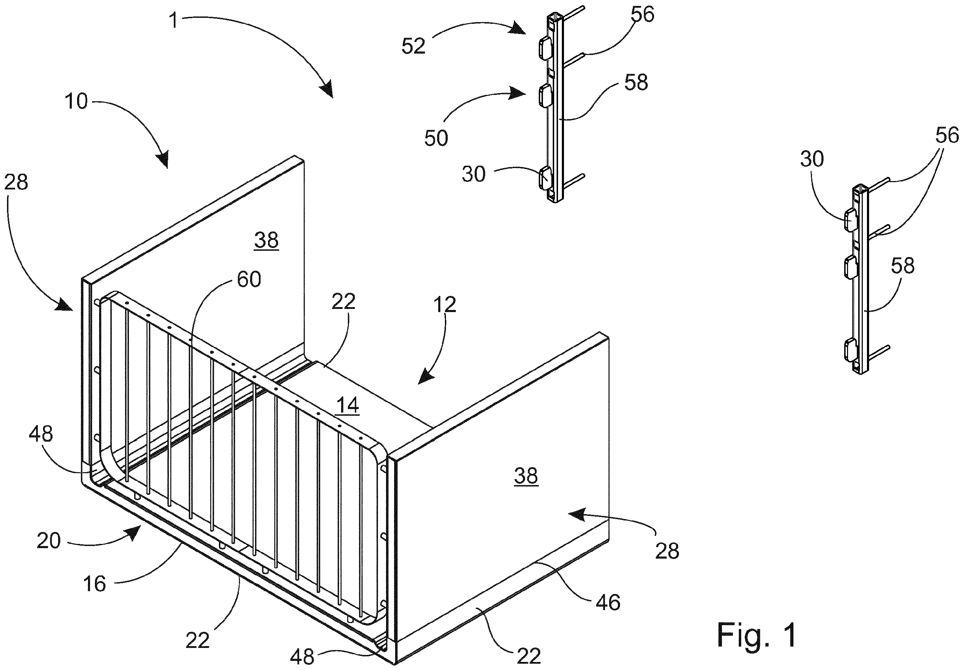

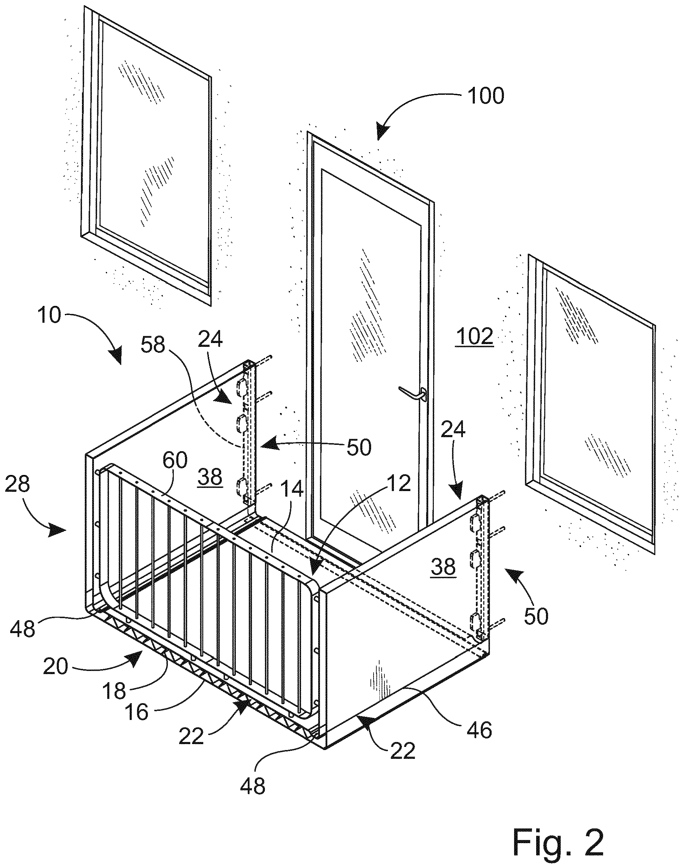

Figure 1 shows the main components of an arrangement 1 according to the invention, which are a balcony 10 and an attachment support counterpart 50 that can be solidly attached to a wall of a building for attaching the balcony 10 to the wall 102 of the building 100 as shown in Figure 2. In the arrangement, the balcony 10 is advantageously manufactured as a complete unit in a factory and is shipped either in a disassembled state or most advantageously in a state of completion to the building site where it is attached to the wall of the building. For the attachment, the attachment support counterpart 50 of Figure 1 must be attached to the wall of the building.

The attachment support counterpart in Figure 1 consists of vertical supports 58, which can advantageously be formed as part of the wall. As shown in Figure 1, the attachment support counterpart 50 includes further attachment means 52, which are shape-closed hooks 30 in this case. The attachment support counterpart can be integrated in the wall, for example in connection with the casting of the wall by embedding the attachment support counterpart in the concrete cast. Figure 1 shows how the attachment support counterpart 50 can include, for example, anchors 56 by means of which the anchoring of the attachment support counterpart 50 in the concrete is improved. The counter attachment support can also be permanently welded to the steel reinforcements of the concrete. Alternatively, the attachment support counterpart can be bolted so as to become part of the wall structure or anchors for an attachment support counterpart can be installed in the wall during its manufacture. Anchors can also be installed in an existing wall of a building, although it is of course easier to implement the arrangement if the attachment support counterpart is integrated in the wall during the construction of the building. As the attachment support counterpart 50 is inside the wall, the further attachment means belonging to the attachment support counterpart must either pierce the material of the wall or the material of the wall must include openings through which the balcony is attached to the attachment support counterpart.

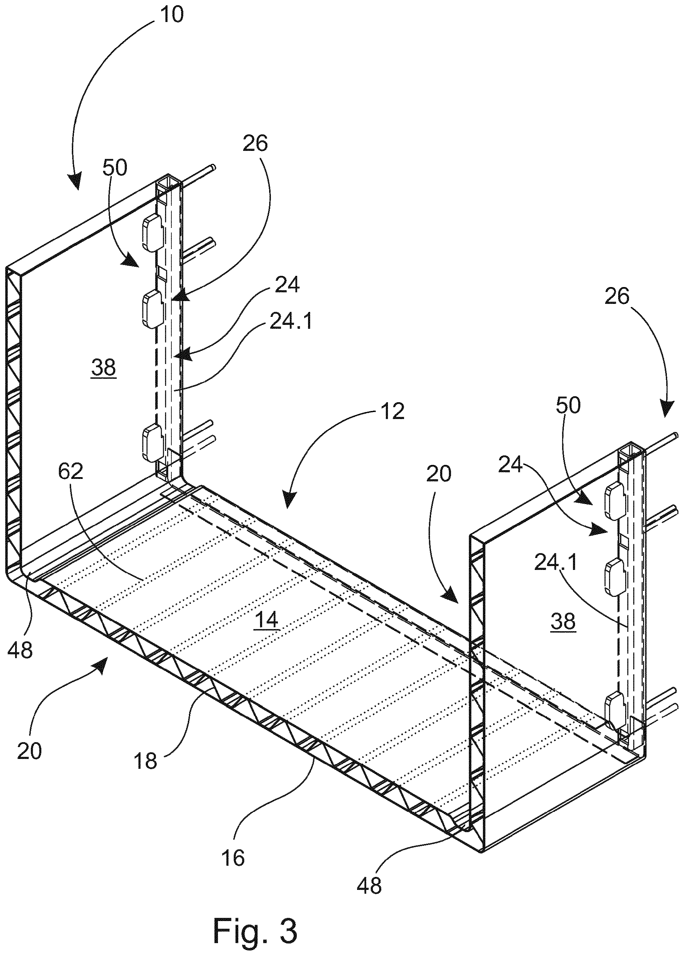

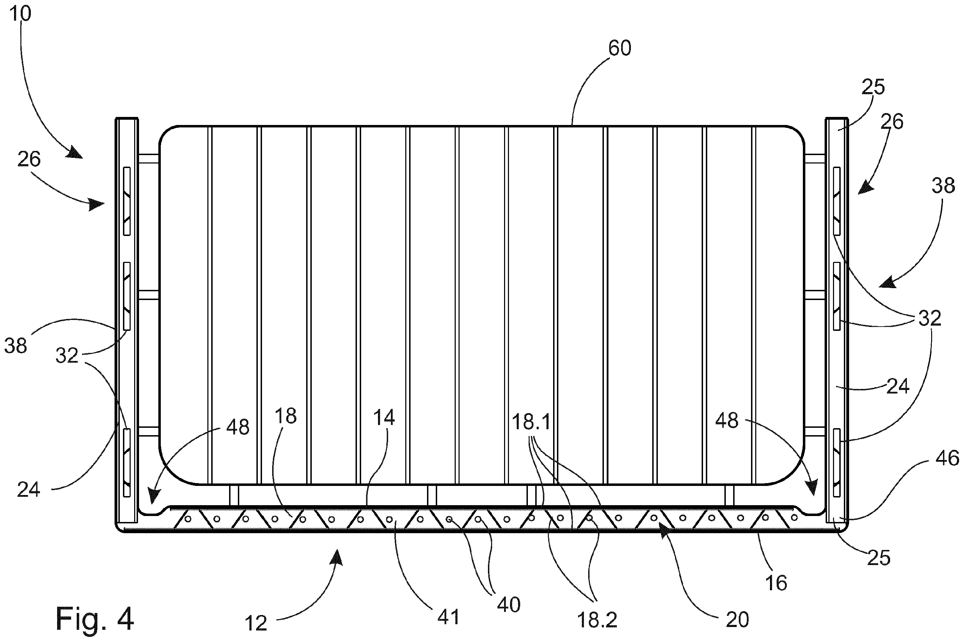

The balcony according to the invention includes the floor part 12 illustrated in Figures 1 and 2, which is formed as a cell structure 20. According to an embodiment of a balcony not a part of the invention, the floor part 12 is formed by a surface plate 14, a base plate 16 and a corrugated intermediate reinforcement plate 18 arranged between the surface plate 14 and the base plate 16. The intermediate reinforcement plate 18 is advantageously a solid corrugated steel sheet, which is alternately attached to the surface plate 14 and to the base plate 16. In the embodiment shown in Figure 4, which is not a part of the invention, the intermediate reinforcement plate 18 is a profile sheet, which has parts 18.1 parallel to the planes of the surface plate 14 and base plate 16 as well as oblique parts 18.2. It is understood that the intermediate reinforcement plate can also be formed in a manner that it does not have parts parallel to the planes of the surface plate and base plate, but rather merely successive oblique parts respectively forming a cross-section of a triangle-shaped profile. The surface plate, the base plate and the intermediate reinforcement plate 18 laser-welded between them form a cell structure 20. The intermediate reinforcement plate 18 is oriented in such a manner that solid laser welds 62, illustrated by dashed lines in Figure 3, are advantageously formed at the points of contact with the surface plate 14 and the base plate 16, the welds 62 extending in the depth direction of the balcony 10, i.e. perpendicular to the plane of the wall of the building. The solid laser welds 62 contribute to the high rigidity of the cell structure. Moreover, the cell structure realized by means of the laser welding is light, as no filler material is used in laser welding. The welding seam is thus small and warpage of the steel plates is slight due to the low thermal stress. The intermediate reinforcement plate thus reinforces the floor part in the depth direction, in which the significance of its rigidity is pivotal. The floor part 12 realized as a cell structure is thin and light, yet simultaneously self-supportingly rigid. Edges 22 of the floor part 12 extend around the perimeter of the floor part 12. In the transverse direction, i.e. in the longitudinal direction of the edge of the balcony placed against the wall, the rigidity of the floor part of the balcony is generated automatically either at the edges of the balcony bordering the support points of the attachment between the balcony and the wall or along the entire width of the balcony.

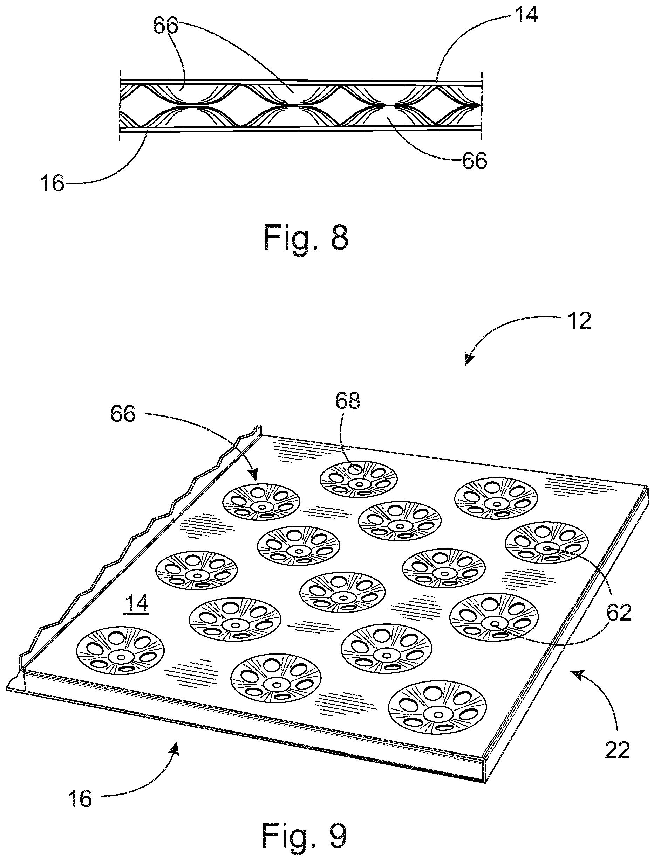

According to the invention illustrated in Figures 8 and 9, the cell structure 20 of the floor part 12 includes calotte cells 66 formed in the surface plate 14 and in the base plate 16, said calotte cells 66 being aligned with one another and welded together by means of laser welds 62. This type of cell structure 20 or so-called domed cell structure can be formed to be very light, since it can be realized without the intermediate reinforcement plate between the surface and base plates, which is permanently welded by long laser welds to both the surface and base plates. When the cell structure using calotte cells is used, these long laser welds are also no longer necessary, as the laser welds which permanently weld the calotte cells to one another extend merely over a short distance. The strength of the cell structure using calotte cells stems from the curvature of the calotte cells, which respectively act as a kind of profile having a high flexural strength in different directions. As a result of its high flexural strength, the thickness of the cell structure can be as thin as 10 mm in a balcony according to the invention; however, the thickness may be in the range 10 - 250 mm for aesthetic reasons.

The calotte cells can be, for example, forms pressed into the surface plate and into the base plate, which can advantageously be circular in shape. The diameter of a circular calotte cell can be 20 - 200 mm. The depth of a calotte cell can be 5 - 125 mm. The calotte cells 66 can include indentations 68, which also facilitate the formation of the calotte cells 66.

For attaching the balcony 10 to a wall, the balcony 10 includes the attachment support 24 illustrated by way of dashed lines in Figure 3 for attaching the balcony 10 to the building 100. In the case shown in Figure 3, the attachment support 24 is formed by two vertical supports 24.1, which are part of the railing structures 28 belonging to the balcony. The railing structures 28 are attached to the floor part 12. The attachment part can be part of the floor part or, more advantageously, part of the railing structure 28 in embodiments of the balcony in which a strong support of the moment is to be produced at the floor part of the balcony against the building. The attachment support 24 can also be attached to both the floor part and the railing structure. The attachment support 24 can be, for example, a hollow profile or a metal bar mounted so as to be parallel to the plane of the wall and formed in a side of the floor part or, advantageously, in the railing structure as illustrated in Figure 3. To assist the attachment support 24 in realizing the attachment, the balcony 10 includes attachment means 26 arranged in the attachment support 24, by means of which the balcony is attached by the force of gravity and in a shape-closed manner in the attachment support counterpart installed in the wall 102 of the building 100 as illustrated in Figure 2.

According to an advantageous embodiment, the attachment means 26 can be attachment hooks arranged in the attachment support 24 or support counterparts 32 that mate with the attachment hooks. In the case of attachment hooks, the support counterparts can be, for example, a transverse bolt or an opening formed in the attachment support 24. In the embodiment of the balcony 10 and arrangement 1 illustrated in Figure 1, the attachment means 26 are support counterparts 32 that mate with the hooks 30, said hooks 30 acting as further attachment means 52 attached to the attachment support counterpart 50. It is understood, however, that the arrangement of the hooks and support counterparts can be reversed. The hooks formed in the attachment support 24 or the openings acting as support counterparts 32 as illustrated in Figure 4 are advantageously positioned at a distance from one another, each being close to one end 25 of the attachment support 24. The balcony is thus supported very securely from the upper and lower ends of the side walls. As illustrated in Figure 4, there can be three openings for ensuring the strength of the attachment at each attachment support.

Alternatively, instead of attachment means realized by means of hooks and support counterparts, the attachment means can also be, for example, nuts and bolts, which produce a fastening when tightened. The advantage of hooks and support counterparts, however, is the principle behind their fastening in that the balcony is attached to the attachment support counterpart by means of its own weight by the force of gravity while the hooks and support counterparts realize a shape-closed fastening which does not require tightening and which does not become loose by use.

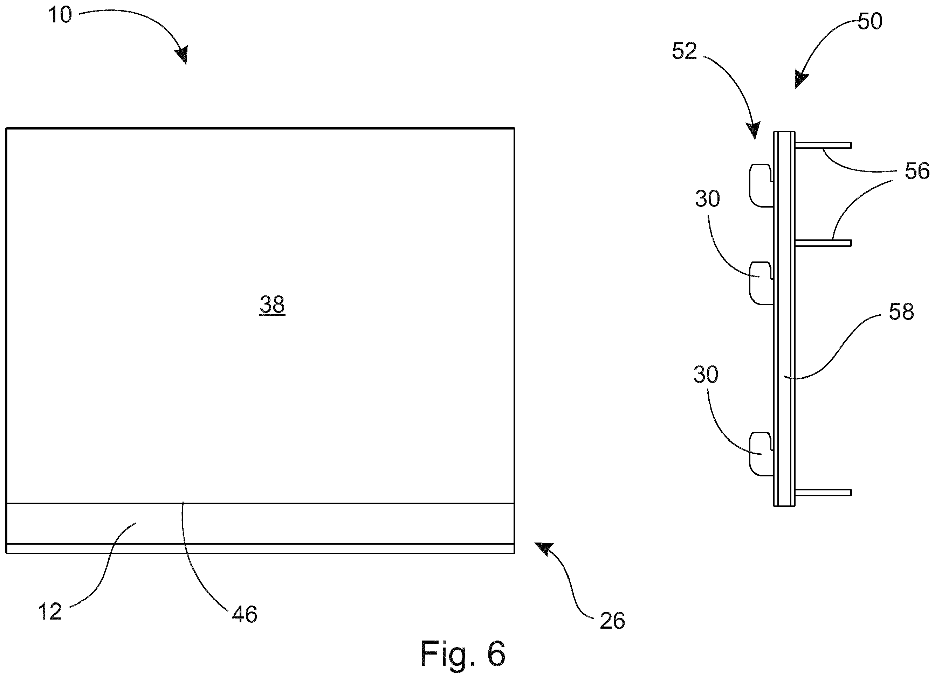

The balcony can also include fastening means by means of which the shape-closed and gravity-engaged attachment means can be fastened in a manner that the balcony does not become detached in the event that some lifting force acts on it from below. The fastening means are particularly significant in cases where the balcony is employed, for example, on a ship where it is even possible that upward accelerations, which would be capable of detaching a balcony from a merely shape-closed and gravity-engaged fastening, act on the balcony as a result of the motion of the sea. In the case of hooks and support counterparts, the fastening means 34 illustrated in Figure 6 can be, for example, ordinary bolts 36, which are bolted transversely through the attachment support in the lateral direction of the balcony. The location of the bolts is such that the bolt is fastened through the hook, more specifically advantageously through the fastening opening that corresponds to the hook.

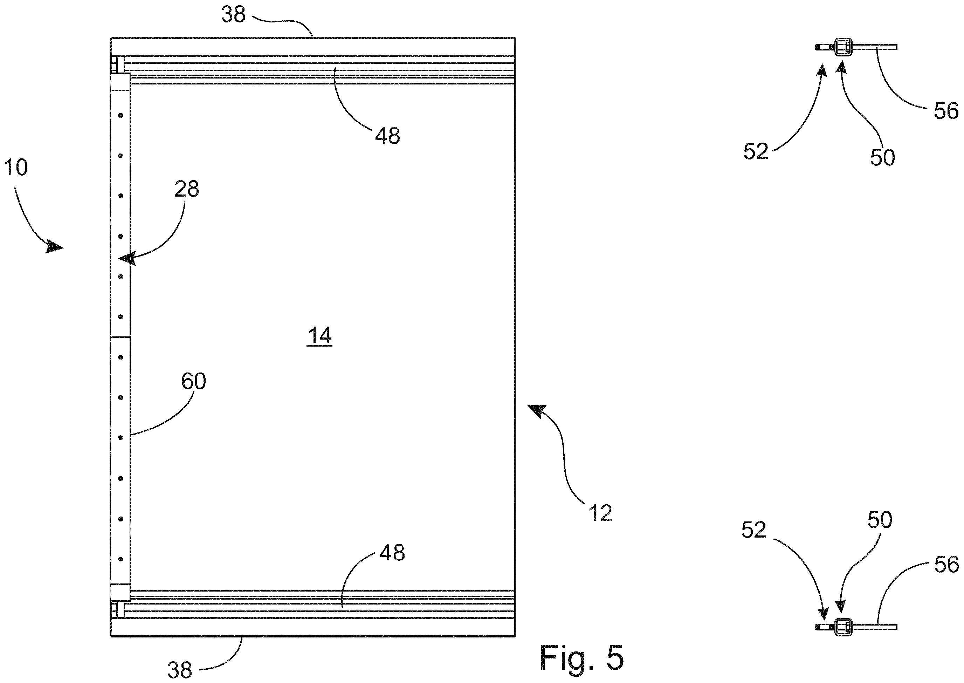

The railing structures 28 of the balcony 10 illustrated in Figures 1 - 6 can advantageously be two side walls 38 realized as a cell structure 20, which are also solidly welded to the floor part 12. This increases the rigidity of the balcony particularly significantly. The third side of the balcony can also include a solid and cell-structured side wall, although it is alternatively possible to implement a picket railing 60 as illustrated in Figures 1 - 3 or also, for example, a glass, plastic or wooden railing. An advantage of a picket railing or a glass railing is that they improve the visibility from the balcony, thus creating the sensation of more space, while they can also be lighter than a cell-structured side wall in order to reduce the overall mass of the balcony.

The floor part 12 illustrated in Figures 1 - 4 and 6 can include, in proximity to the point of attachment 46 between the side walls 38 and the floor part 12, gutter grooves 48, which extend in a transverse direction in relation to the attachment support and parallel to the plane of the floor part 12. The purpose of the gutter grooves 48 is to collect water present on the surface plate 14 of the floor part 12 and to conduct it away from the balcony. The balcony thus dries faster, which increases its practical convenience and service life. The gutter grooves are advantageously configured so that their depth increases in the direction leading away from the attachment support in order to avoid that water is guided to the area between the balcony and the wall of the building. The depth of a gutter groove can be 10 - 50 mm, advantageously 15 - 25 mm, and its width can be 50 - 150 mm, advantageously 70 - 120 mm. The gutter grooves can be formed by planning suitable forms for the steel sections of the floor part so that the gutter groove is produced automatically during the manufacture of the floor part.

According to an embodiment, heat-regulation means 40 are arranged inside the cell structure 20 of the floor part 12, as illustrated in Figure 4, for regulating the temperature of the floor part 12. The heat-regulation means 40 in their simplest form can be heating resistors by means of which the floor part 12 is heated. Alternatively, the heat-regulation devices can also be pipes in which heat-transfer fluid is circulated. By means of the heat-transfer fluid, the balcony can be either heated or cooled according to usage and requirements.

A fluid 41 with a low freezing point can also be arranged inside the cell structure of the floor part 12 in order to improve the fire resistance of the floor part 12 of the balcony 10. If a fire breaks out, the ability of the balcony to withstand the thermal stress of the fire thus increases significantly, the fluid present inside it absorbing the heat and keeping the structure of the balcony cooler for longer. The spread of fires can be slowed in this manner. A fluid with a low freezing point can mean, for example, glycol or a corresponding fluid that does not freeze.

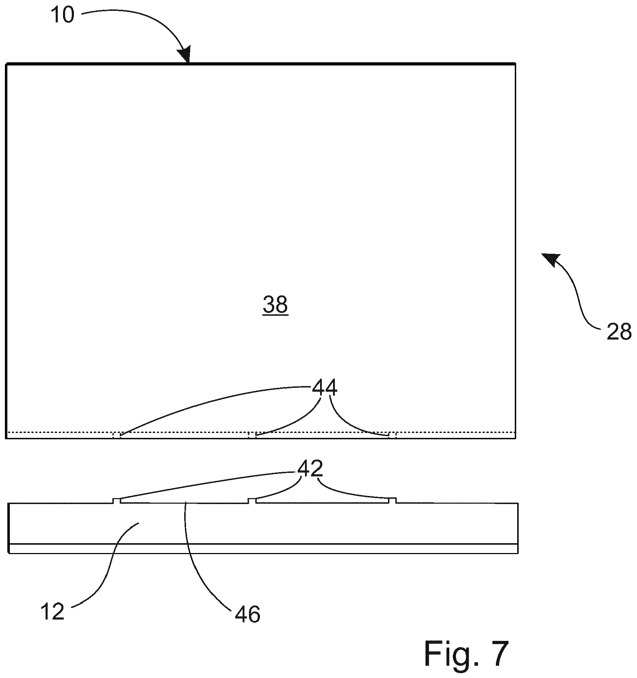

In order to facilitate the assembly of the balcony 10, the railing structures 28 and the floor part 12 can include the positioning tabs 42 and corresponding holes 44 illustrated in Figure 7 for aligning the railing structures 28 and the floor part 12 with each other. A positioning tab can be a projection protruding from the bottom of a railing structure 28 or from the surface plate of the floor part, said projection being formed at an exact location during the automatic cutting of the metal parts of the balcony. A hole provided in the opposite part, which is also formed at an exact location, matches the projection. It is thus easy to align parts with one another when assembling the balcony so that a welder can weld the railing structure to the floor part without any separate verifying measurements. It is thus also ensured that the different components of the balcony fit together with a high precision, as high as a precision of 0.5 mm.

The balcony according to the invention is advantageously manufactured using stainless steel plate with a thickness of 0.5 - 4 mm, advantageously 1 - 2 mm. The balcony can be 1200 - 3000 mm, advantageously 1500 - 2000 mm, in width; 500 - 2000 mm, advantageously 800 - 1200 mm, in height; and 800 - 2000 mm, advantageously 1000 - 1500 mm, in depth. An 1800 mm wide, 1000 mm high and 1200 mm deep balcony manufactured from 1 mm steel plate without any fluid arranged inside the cell structure of the floor part can weigh, for example, approximately 360 kg. The yield strength of the steel plate can be 300 - 800 N/mm², advantageously 400 - 600 N/mm². It is understood in this context that the measurements indicated above are merely illustrative and that for example, the rigidity of the floor part can be increased considerably by increasing the thickness of the cell structure of the floor part, i.e. the distance between the surface plate and the base plate of the floor part, thus rendering possible the realization of a larger balcony than the measurements indicated above while exploiting the idea according to the invention. Although the balcony in the embodiment illustrated in the figures is rectangular by the shape of its floor part, the form of the floor part of the balcony can also be curved or have some other shape practically suited to a balcony.

The balcony according to the invention and in particular its floor part can also be surfaced with different user-friendly surfaces such as, for example, teak, laminate, plastic, wood, slate or with a corresponding replaceable surface according to the wishes of the customer. Lighting, power sockets and the like can also be integrated in the balcony.

The balcony and system according to the invention are suitable for use in the context of both new buildings as well as the renovation of balconies of existing buildings. Moreover, the invention can also be utilized, for example, in balconies on ships. The balcony according to the invention also enables the easy detachment of the balcony should a balcony not be required. On the other hand, it is also easy to re-install the balcony in cases where the building already comprises the attachment support counterpart for a balcony so that it is merely necessary to raise the balcony into position and fasten the same there.

As a part not included in the invention, the idea of the balcony and arrangement according to the invention can also be realized in a solution where the arrangement and the balcony are otherwise in accordance with the patent claims, but the cell structure is realized using a fibre-reinforced composite or carbon fibre, while gravity-engaged and shape-closed hooks and support counterparts are used as the attachment means and further attachment means. A prefabricated, modular balcony structure and easy mountability in a wall of a building at the site of its use are likewise achieved in such a solution.

## Claims

1. A prefabricated modular balcony (10), which includes
- a floor part (12) comprising a surface plate (14) and a base plate (16), which surface plate (14) and base plate (16) form at least a part of a cell structure (20) that forms the floor part (12),
- an attachment support (24) for attaching the balcony (10) to a building (100),
- attachment means (26) arranged in the attachment support (24) for attaching the floor part (12) to an attachment support counterpart (50) of a wall (102) of the building (100),
- railing structures (28) attached to the floor part (12),
wherein the balcony (10) is a metal welded structure and the surface plate (14) and the base plate (16) are joined together by means of welds (62) to form the cell structure (20), **characterized in that** the welds are laser-welds (62) and the surface plate (14) and base plate (16) both include calotte cells (66) which are opposite with respect to one another, at the site of which calotte cells (66) the surface plate (14) and base plate (16) are joined together by means of the laser welds (62).

2. The balcony according to claim 1, **characterized in that** the balcony (10) includes at least two side walls (38) which form a railing structure (28), each solidly attached to the floor part (12).

3. The balcony according to claim 2, **characterized in that** the attachment supports (24) are attached to the side walls (38) for suspending the balcony (10) by means of the side walls (38) from the building (100).

4. The balcony according to any of claims 1 - 3, **characterized in that** said attachment means (26) are
- shape-closed hooks (30) or support counterparts (32) that mate with the shape-closed hooks (30) arranged in the attachment support (24) for attaching the balcony (10) in a shape-closed and gravity-engaged manner to a wall (102) of a building (100) as well as
- fastening means (34) for fastening the attachment between the attachment means (24) and the wall (102).

5. The balcony according to claim 4, **characterized in that** said fastening means (34) are transverse bolts (36) of the hooks (30), which bolts (36) are arranged in a transverse direction through the attachment support (24).

6. The balcony according to claim 4 or 5 , **characterized in that** each attachment support (24) is arranged to be attached to the attachment support counterpart (50) of the wall (102) of the building (100) using at least two shape-closed hooks (30) or support counterparts (32) as fastening means, which hooks (30) and support counterparts (32) are arranged in the attachment support (24) in relation to the ends (25) of the attachment support (24) in such a manner that a gap remains between the hooks (30) and the support counterparts (32) of each attachment support (24), the gap being 35 - 95 %, advantageously 50 - 90 %, of the length of the attachment support (24) .

7. The balcony according to any of claims 1 - 6, **characterized in that** the railing structures (28) and floor part (12) include positioning tabs (42) and corresponding holes (44) for aligning the railing structures (28) and the floor part (12) with each other.

8. The balcony according to any of claims 2 - 7, **characterized in that** said side walls (38) are laser-welded cell structures (20).

9. The balcony according to claims 1 - 8, **characterized in that** the floor part (12) of the balcony (10) is made of metal plate 0.5 - 10.0 mm, advantageously 1.0 - 3.0 mm, in thickness.

10. The balcony according to any of claims 1 -9, **characterized in that** the width of the laser weld (62) is 0.8 - 2.0 mm, advantageously 1.0 - 1.5 mm.

11. An arrangement (1), which includes
- a prefabricated modular balcony (10),
- an attachment support counterpart (50) that can be solidly attached to a wall (102) of a building (100) for the attachment of the balcony (10) to a wall (102) of a building (100),
- second attachment means (52) arranged in the attachment support counterpart (50) for attaching the attachment support counterpart (50) and the floor part (12) in a detachable manner to a wall (102) of a building (100), **characterized in that** the balcony (10) is the balcony according to any of claims 1 - 10.

## Patentansprüche

1. Vorgefertigter modularer Balkon (10), der Folgendes enthält:
- einen Bodenteil (12), umfassend eine Oberflächenplatte (14) und eine Grundplatte (16), wobei die Oberflächenplatte (14) und die Grundplatte (16) zumindest einen Teil einer Zellstruktur (20) bilden, die den Bodenteil (12) bildet,
- eine Befestigungsstütze (24) zum Befestigen des Balkons (10) an einem Gebäude (100),
- Befestigungsmittel (26), die in der Befestigungsstütze (24) angeordnet sind, um den Bodenteil (12) an einem Befestigungsstützengegenstück (50) einer Wand (102) des Gebäudes (100) zu befestigen,
- Geländerstrukturen (28), die an dem Bodenteil (12) befestigt sind,
wobei der Balkon (10) eine metallgeschweißte Struktur ist und die Oberflächenplatte (14) und die Grundplatte (16) mithilfe von Schweißnähten (62) miteinander verbunden sind, um die Zellstruktur (20) zu bilden, **dadurch gekennzeichnet, dass** die Schweißnähte Laserschweißnähte (62) sind und sowohl die Oberflächenplatte (14) als auch die Grundplatte (16) Kalottenzellen (66) einschließen, die einander gegenüberliegen, wobei die Oberflächenplatte (14) und die Grundplatte (16) an der Position dieser Kalottenzellen (66) mithilfe der Laserschweißnähte (62) miteinander verbunden sind.

2. Balkon nach Anspruch 1, **dadurch gekennzeichnet, dass** der Balkon (10) mindestens zwei Seitenwände (38) einschließt, welche eine Geländerstruktur (28) bilden, wobei jede fest an dem Bodenteil (12) befestigt ist.

3. Balkon nach Anspruch 2, **dadurch gekennzeichnet, dass** die Befestigungsstützen (24) an den Seitenwänden (38) befestigt sind, um den Balkon (10) mit Hilfe der Seitenwände (38) an dem Gebäude (100) aufzuhängen.

4. Balkon nach einem der Ansprüche 1 - 3, **dadurch gekennzeichnet, dass** die Befestigungsmittel (26)
- formschlüssige Haken (30) oder Stützengegenstücke (32) sind, die mit den in der Befestigungsstütze (24) angeordneten formschlüssigen Haken (30) zusammenpassen, um den Balkon (10) formschlüssig und unter Einwirkung der Schwerkraft an einer Wand (102) eines Gebäudes (100) zu befestigen, sowie
- Befestigungsmittel (34) zum Befestigen der Befestigung zwischen den Befestigungsmitteln (24) und der Wand (102).

5. Balkon nach Anspruch 4, **dadurch gekennzeichnet, dass** die Befestigungsmittel (34) Querbolzen (36) der Haken (30) sind, wobei die Bolzen (36) in einer Querrichtung durch die Befestigungsstütze (24) angeordnet sind.

6. Balkon nach Anspruch 4 oder 5, **dadurch gekennzeichnet, dass** jede Befestigungsstütze (24) so angeordnet ist, dass sie an dem Befestigungsstützengegenstück (50) der Wand (102) des Gebäudes (100) unter Verwendung von mindestens zwei formschlüssigen Haken (30) oder Stützengegenstücken (32) als Befestigungsmittel befestigt wird, wobei die Haken (30) und die Stützengegenstücke (32) in der Befestigungsstütze (24) in Bezug auf die Enden (25) der Befestigungsstütze (24) so angeordnet sind, dass zwischen den Haken (30) und den Stützengegenstücken (32) jeder Befestigungsstütze (24) ein Spalt verbleibt, wobei der Spalt 35 - 95 %, vorteilhafterweise 50 - 90 %, der Länge der Befestigungsstütze (24) beträgt.

7. Balkon nach einem der Ansprüche 1 - 6, **dadurch gekennzeichnet, dass** die Geländerstrukturen (28) und der Bodenteil (12) Positionierungslaschen (42) und entsprechende Löcher (44) zum Ausrichten der Geländerstrukturen (28) und des Bodenteils (12) aneinander einschließen.

8. Balkon nach einem der Ansprüche 2 - 7, **dadurch gekennzeichnet, dass** die Seitenwände (38) lasergeschweißte Zellstrukturen (20) sind.

9. Balkon nach einem der Ansprüche 1 - 8, **dadurch gekennzeichnet, dass** der Bodenteil (12) des Balkons (10) aus einer Metallplatte von 0,5 - 10,0 mm, vorteilhafterweise 1,0 - 3,0 mm Dicke hergestellt ist.

10. Balkon nach einem der Ansprüche 1 - 9, **dadurch gekennzeichnet, dass** die Breite der Laserschweißnaht (62) 0,8 - 2,0 mm, vorteilhafterweise 1,0 - 1,5 mm, beträgt.

11. Anordnung (1), die Folgendes einschließt:
- einen vorgefertigten modularen Balkon (10),
- ein Befestigungsstützengegenstück (50), das fest an einer Wand (102) eines Gebäudes (100) befestigt werden kann, um den Balkon (10) an einer Wand (102) eines Gebäudes (100) zu befestigen,
- zweite Befestigungsmittel (52), die in dem Befestigungsstützengegenstück (50) angeordnet sind, um das Befestigungsstützengegenstück (50) und den Bodenteil (12) in abnehmbarer Weise an einer Wand (102) eines Gebäudes (100) zu befestigen, **dadurch gekennzeichnet, dass** der Balkon (10) der Balkon nach einem der Ansprüche 1 - 10 ist.

## Revendications

1. Balcon modulaire préfabriqué (10), qui comprend
- un plancher (12) composé d'une plaque de surface (14) et d'une plaque de base (16), lesdites plaque de surface (14) et plaque de base (16) constituant au moins une partie d'une structure alvéolaire (20) formant le plancher (12),
- un support de fixation (24) pour fixer le balcon (10) à un bâtiment (100),
- des moyens de fixation (26) disposés dans le support de fixation (24) pour fixer le plancher (12) à un élément de fixation correspondant (50) sur le mur (102) du bâtiment (100),
- des structures pour garde-corps (28) fixées au plancher (12),
dans lequel le balcon (10) est une structure métallique soudée et la plaque de surface (14) et la plaque de base (16) sont assemblées par des soudures (62) pour former la structure alvéolaire (20), **caractérisé en ce que** les soudures sont des soudures au laser (62) et la plaque de surface (14) et la plaque de base (16) comprennent toutes deux des alvéoles de type calottes (66) opposées les unes aux autres, au niveau desquelles la plaque de surface (14) et la plaque de base (16) sont assemblées au moyen des soudures au laser (62).

2. Balcon conformément à la revendication 1, **caractérisé en ce que** le balcon (10) comprend au moins deux murs latéraux (38) qui forment une structure de garde-corps (28), chacun étant solidement fixé au plancher (12).

3. Balcon conformément à la revendication 2, **caractérisé en ce que** les supports de fixation (24) sont fixés aux murs latéraux (38) pour suspendre le balcon (10) au moyen des murs latéraux (38) au bâtiment (100).

4. Balcon conformément à l'une quelconque des revendications 1 à 3, **caractérisé en ce que** lesdits moyens de fixation (26) sont
- des crochets fermés (30) ou des éléments de fixation correspondants (32) destinés à recevoir les crochets fermés (30) disposés dans le support de fixation (24) pour fixer le balcon (10) de manière fermée et en utilisant la gravité au mur (102) d'un bâtiment (100) ainsi que
- des moyens de connexion (34) pour connecter les moyens de fixation (24) au mur (102).

5. Balcon conformément à la revendication 4, **caractérisé en ce que** lesdits moyens de connexion (34) sont les boulons transversaux (36) des crochets (30), lesdits boulons (36) étant disposés de manière transversale dans le support de fixation (24).

6. Balcon conformément à la revendication 4 ou 5, **caractérisé en ce que** chaque support de fixation (24) doit être fixé à l'élément de fixation correspondant (50) sur le mur (102) du bâtiment (100) à l'aide d'au moins deux crochets fermés (30) ou éléments de fixation correspondants (32) en tant que moyens de connexion, lesdits crochets (30) et éléments de fixation correspondants (32) étant disposés dans le support de fixation (24) au niveau des extrémités (25) du support de fixation (24) de manière à laisser un écart entre les crochets (30) et les éléments de fixation correspondants (32) de chaque support de fixation (24), l'écart représentant entre 35 et 95 %, avantageusement entre 50 et 90 %, de la longueur du support de fixation (24).

7. Balcon conformément à l'une quelconque des revendications 1 à 6, **caractérisé en ce que** les structures de garde-corps (28) et le plancher (12) comprennent des taquets de positionnement (42) et les orifices correspondants (44) pour aligner les structures de garde-corps (28) avec le plancher (12).

8. Balcon conformément à l'une quelconque des revendications 2 à 7, **caractérisé en ce que** lesdits murs latéraux (38) sont des structures alvéolaires soudées au laser (20).

9. Balcon conformément aux revendications 1 à 8, **caractérisé en ce que** le plancher (12) du balcon (10) est composé d'une plaque métallique de 0,5 à 10,0 mm, avantageusement de 1,0 à 3,0 mm, en épaisseur.

10. Balcon conformément à l'une quelconque des revendications 1 à 9, **caractérisé en ce que** la largeur de la soudure au laser (62) est comprise entre 0,8 et 2,0 mm, avantageusement entre 1,0 et 1,5 mm.

11. Aménagement (1), qui comprend
- un balcon modulaire préfabriqué (10),
- un élément de fixation correspondant (50) qui peut être solidement fixé au mur (102) d'un bâtiment (100) pour fixer le balcon (10) au mur (102) d'un bâtiment (100),
- d'autres moyens de fixation (52) disposés dans l'élément de fixation correspondant (50) pour fixer l'élément de fixation correspondant (50) et le plancher (12) de manière amovible au mur (102) d'un bâtiment (100), **caractérisé en ce que** le balcon (10) est le balcon conformément aux revendications 1 à 10.
